(19) **Europäisches Patentamt / European Patent Office / Office européen des brevets**

(11) **EP 2 855 389 B1**

(12) **FASCICULE DE BREVET EUROPEEN**

(45) Date de publication et mention de la délivrance du brevet:
**25.12.2019 Bulletin 2019/52**

(21) Numéro de dépôt: **13731387.0**

(22) Date de dépôt: **31.05.2013**

(51) Int Cl.:
**C04B 14/26** (2006.01)      **C04B 38/10** (2006.01)
**F16L 59/00** (2006.01)      **C08J 9/00** (2006.01)
**C08J 9/30** (2006.01)

(86) Numéro de dépôt international:
**PCT/FR2013/051233**

(87) Numéro de publication internationale:
**WO 2013/182787 (12.12.2013 Gazette 2013/50)**

(54) **PRODUITS D'ISOLATION THERMIQUE HAUTES PERFORMANCES**

LEISTUNGSSTARKE WÄRMEDÄMMPRODUKTE

HIGH-PERFORMANCE THERMAL INSULATION PRODUCTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2012 FR 1255201**

(43) Date de publication de la demande:
**08.04.2015 Bulletin 2015/15**

(73) Titulaire: **Saint-Gobain Isover**
**92400 Courbevoie (FR)**

(72) Inventeurs:
• **GOLETTO, Valérie**
  **F-94700 Maisons-Alfort (FR)**
• **SAISON, Tamar**
  **F-75013 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-03/097227      WO-A1-2010/126792**
**WO-A1-2011/095745**

EP 2 855 389 B1

## Description

La présente invention concerne un produit ou matériau d'isolation thermique haute performance, son procédé de fabrication, ainsi que son utilisation dans le domaine de la construction pour isoler les parois (extérieures ou intérieures) de bâtiments ou isoler sous toiture ou combler des interstices dans des matériaux (murs creux ou "cavity walls", canalisations, etc.), ce produit isolant pouvant se présenter sous forme de panneaux, ou éventuellement sous forme de granulés ou granulats, blocs, couches, projetés, moulés, etc.

Qu'il s'agisse du marché du neuf ou de la rénovation, la demande de produits d'isolation, en particulier thermique, performants, est toujours aussi importante. Outre des propriétés d'isolation accrues et le respect du cahier des charges des ouvrages du bâtiment, la demande pour des produits offrant plus de confort d'utilisation, de pérennité, d'économie de matière première, etc. dans une optique notamment de développement durable, est également croissante. Il est particulièrement avantageux, dans cette recherche de matériaux offrant une meilleure isolation thermique que lesdits matériaux présentent également, voire améliorent, d'autres propriétés recherchées dans la construction de bâtiments, notamment en matière d'allègement de charge, de résistance mécanique, d'isolation phonique, etc.

On connait actuellement une grande variété d'isolants thermiques. Parmi les produits les plus courants, on peut citer les isolants fibreux, à base de fibres naturelles ou synthétiques telles que la laine de verre ou la laine de roche, les isolants cellulaires du type polymère expansé tel que le polystyrène expansé ou extrudé, ou les mousses phénoliques ou de polyuréthane. Les performances thermiques des matériaux isolants essentiellement minéraux se traduisent par des valeurs de conductivité thermique $\lambda$ couramment supérieures à 35, en particulier de l'ordre de 40 mW/m.K, valeurs qui peuvent être plus basses dans le cas des isolants essentiellement organiques, par exemple dans le cas d'isolants cellulaires incorporant un gaz de plus faible conductivité thermique que l'air pour améliorer les performances thermiques. Un inconvénient de ces matériaux toutefois est la difficulté de conserver le gaz au sein de la matrice au cours du temps, le matériau perdant en vieillissant une partie de ses performances thermiques. De surcroit, pour les isolants organiques, la réaction au feu est mauvaise du fait de leur nature.

On peut également avoir recours à des matériaux dans lesquels un vide a été effectué de façon à former par exemple des panneaux sous vide. Ces isolants sont difficiles à utiliser car ils ne peuvent être ni découpés, ni percés, et ils peuvent subir une perte progressive du vide sur des longues durées.

On peut également citer comme isolants les aérogels, généralement sous forme de granules translucides ou de poudre fine, particulièrement performants en termes d'isolation thermique, mais dont les faibles propriétés mécaniques imposent de les utiliser avec des protections ou un agent de renforcement, ou les aérogels au sein de mats (ou nappes) formés de fibres enchevêtrées (mécaniquement résistantes) pour lesquels il peut être difficile de donner une forme déterminée. Ces aérogels sont difficiles et coûteux à obtenir à l'échelle industrielle, ils nécessitent des conditions de séchages délicates et leur combinaison avec d'autres isolants pour obtenir une tenue mécanique ou une forme adéquate peut être complexe. Leur utilisation reste donc limitée.

Les documents WO2010/126792 A1, WO2011/095745 A1 et WO03/097227 A1 décrivent des matériaux d'isolation thermique formés à partir de compositions à base de particules d'aérogel.

Il existe par conséquent une forte demande pour développer des produits ou matériaux performants en termes d'isolation thermique, mais plus faciles et moins coûteux à fabriquer industriellement que les aérogels notamment. Outre ses bonnes performances thermiques (améliorées par rapport aux produits minéraux courants), il est souhaitable que le produit présente une bonne tenue (notamment au vieillissement, ou en terme de résistance mécanique ou autre : chimique, feu, etc.). Il est également souhaitable que ces améliorations se fassent sans alourdir la charge du produit, un produit allégé étant préférentiellement recherché. Il est également souhaitable qu'il reste facile à étaler lors de son durcissement et permette la réalisation de toutes les formes souhaitables, notamment par moulage (ou éventuellement par étalement ou projection d'une couche).

La présente invention a ainsi mis au point de nouveaux produits (ou matériaux) isolants permettant d'atteindre ce but et de pallier aux inconvénients cités précédemment, ces nouveaux matériaux étant essentiellement minéraux, étant obtenus directement (sans devoir recourir à une réaction chimique modifiant leur composition chimique) à partir de particules minérales, autres que des aérogels, de (ou possédant une) porosité avantageusement sub- (ou sous-) micronique (c'est-à-dire comprenant des pores de diamètres inférieurs à 1 $\mu$m), en particulier à partir de particules minérales de carbonates, ces carbonates présentant notamment l'avantage d'être des matières premières peu couteuses. Les matériaux obtenus à partir des carbonates usuels pouvant cependant fissurer au séchage lors de leur obtention et étant moins performants que ceux obtenus à partir d'autres matières premières micro-poreuses inorganiques telles que les particules de silice, la présente invention a cherché plus particulièrement à obtenir des produits isolants à base de carbonates plus performants, ces produits présentant à la fois résistance (notamment au feu) et tenue (en particulier mécanique, les matériaux notamment ne fissurant pas au séchage), et de bonnes performances thermiques (au moins équivalentes à celles des mousses organiques traditionnelles de polystyrène expansée ou de polyuréthane dont les valeurs de conductivité thermique sont au moins inférieures à 35 mW/m.K), et étant en outre légers et économiques.

La présente invention répond aux précédents objectifs en proposant un nouveau produit (ou matériau) isolant thermique, en particulier un produit au moins sous forme d'une mousse (c'est-à-dire sous forme d'une mousse ou comprenant au moins une mousse, ou à base d'au moins une mousse) solide ou rigide, formé à partir de (ou fait à partir de, ou à base de, ou formé de) particules minérales, autres que des aérogels, telles que leur masse volumique en vrac (ou masse volumique apparente des particules, en mélange avec l'air) est inférieure à 280 kg/m³, de préférence inférieure à 250 kg/m³, et notamment inférieure à 200 kg/m³, et telles que la masse volumique de la galette obtenue par séchage à 40 °C d'une dispersion de ces particules dans l'eau est inférieure à 600 kg/m³, de préférence inférieure à 450 kg/m³, ce produit présentant à la fois une bonne tenue et résistance et des propriétés thermiques améliorées (notamment par rapport à des matériaux obtenus à partir de particules de même nature mais ne répondant pas à la définition précédente) comme recherché selon l'invention.

Les masses volumiques sont déterminées de façon connue en faisant pour un volume du matériau considéré (ensemble de particules, ou galette), le rapport de la masse du matériau sur le volume du matériau, la galette occupant un volume fixe aisément déterminable et le volume pour les particules en vrac étant mesuré en procédant notamment comme suit : les particules, avant d'être dispersées dans un médium (dispersion notamment utilisée dans le procédé selon l'invention), se présentant généralement sous forme d'une poudre, chaque grain de poudre (de taille généralement de l'ordre d'un à quelques millimètres) étant formé d'un nombre plus ou moins important de particules (éventuellement agglomérées), on remplit en particulier un volume de 100 ml (avec la poudre) de particules sans opérer de tassement supplémentaire (avant pesée du volume rempli de particules pour déterminer la masse volumique apparente).

La présente invention concerne également un procédé d'obtention dudit produit (ou matériau) isolant, lorsqu'il est sous forme de mousse, ce procédé comprenant les étapes suivantes :

- au moins une étape de réalisation d'une mousse (aqueuse (ou humide)), à partir d'un mélange (ou ensemble), généralement aqueux (dispersion, en particulier suspension dans l'eau), (à base) de particules minérales, autres que des aérogels, ces particules étant telles que leur masse volumique en vrac est inférieure à 280 kg/m³, et étant telles que la masse volumique de la galette obtenue par séchage à 40 °C d'une dispersion de ces particules dans l'eau est inférieure à 600 kg/m³, ces particules présentant avantageusement une surface spécifique S supérieure à 5 m²/g, en particulier supérieure à 20 m²/g;
- au moins une étape de mise en forme (généralement pour former un monolithe et/ou une couche), notamment par moulage ou coulage ou projection (sur une surface ou paroi) de cette mousse ;
- au moins une étape de séchage (en laissant sécher ou en séchant) au moins partiel de la mousse ou du matériau ainsi obtenu.

Avantageusement, les particules sélectionnées dans la présente invention sont telles qu'elles présentent une porosité sub- (ou sous-) micronique, cette porosité étant constituée de pores (dits submicroniques) de diamètres (c'est-à-dire présentant une distribution de diamètres) compris entre 10 nm et 1 μm (c'est-à-dire que chaque pore de cette catégorie présente un diamètre compris dans cette gamme, la distribution de l'ensemble des diamètres de ces pores étant plus ou moins étroite ou resserrée) en particulier entre 100 nm et 1 μm, notamment entre 500 nm et 1 μm.

Les particules sont également avantageusement de taille micronique, c'est-à-dire que ces particules présentent avantageusement une taille (on considère ici le diamètre médian D50 - ou diamètre d'au moins 50% (en poids) des particules) d'au moins 500 nm, de préférence d'au moins 750 nm, de façon particulièrement préféré d'au moins 900 nm, en particulier d'au moins 1 μm, notamment de quelques micromètres (en particulier entre 0.5 μm (ou 1 μm) et 6 μm, par exemple autour de 2-3 μm), cette taille (D50) n'excédant pas (ou étant inférieure ou égale à) de préférence 25 μm (en particulier n'excédant pas 22 μm pour les diatomées mentionnées ultérieurement, voire n'excédant pas 15 μm, voire même n'excédant pas 7 μm, notamment pour les carbonates mentionnés ultérieurement).

En outre, le volume poreux des pores submicroniques des particules est préférentiellement d'au moins 0.8 cm³/g (c'est-à-dire 0.8 cm³ par gramme de matériau), en particulier d'au moins 0.88 cm³/g, notamment d'au moins 1 cm³/g, voire d'au moins 1.3 cm³/g (en particulier pour les carbonates) et peut aller jusqu'à au moins 2 cm³/g ou jusqu'à 2.3 cm³/g notamment.

En outre, les particules sont avantageusement de surface spécifique S supérieure à 5 m²/g, de préférence supérieure à 15 m²/g, et notamment supérieure à 20 m²/g.

Avantageusement, la masse volumique (apparente ou globale, c'est-à-dire mesurée sur l'ensemble du produit) du produit ou matériau isolant obtenu est inférieure à 300 kg/m³, en particulier inférieure à 200 kg/m³, notamment inférieure à 150 kg/m³, voire le cas échéant inférieure à 100 kg/m³.

On utilise de préférence, pour obtenir le produit (notamment la mousse) selon l'invention, des particules de carbonates, en particulier calco-magnésiens (renfermant du calcium et/ou du magnésium), et/ou des particules de diatomées (composés naturels à base de silice amorphe, appelés aussi « terres de diatomées »), répondant à la précédente définition, ces matières présentant l'avantage d'être peu couteuses (d'autres matières pouvant également être utilisées telles que des silicates de calcium, des argiles, etc.), la sélection de ces particules répondant à la précédente définition ayant donné des résultats particulièrement satisfaisants, en particulier les particules de carbonates mixtes à base d'hydromagnésite en mélange avec de la brucite ou une partie calcique, et/ou les diatomées, la forme (ou morphologie) de ces particules, observée par microscope électronique à balayage, initialement et/ou au sein des galettes, étant également avantageusement choisie sous forme (approximativement) de plaquettes ou rosaces ou sphères ou disques ou cylindres, formé(e)s le cas échéant d'agrégats (notamment composites) et/ou d'agglomérats. Les particules minérales sélectionnées conviennent particulièrement à la réalisation des produits recherchés. On obtient selon l'invention des produits ou matériaux stables, présentant une bonne tenue et de bonnes propriétés d'isolation thermique, comme explicité et illustré ultérieurement, tout en restant le cas échéant économiques. On observe notamment au cours de la mise en œuvre des particules pour obtenir un produit sous forme de mousse, une stabilisation des particules et des interfaces de la mousse (les interfaces de la mousse étant stabilisés par les particules submicroniques choisies) permettant une bonne mise en forme de la mousse et une bonne stabilité des particules et de la mousse humide (vis-à-vis notamment du drainage, du mûrissement d'Ostwald, de la coalescence, etc.), la stabilité de cette mousse humide étant importante car permettant de conserver la structure poreuse lors de son séchage et donc d'obtenir une mousse cohésive/solide (à l'opposé, des particules isolantes de type aérogels ne permettraient pas d'obtenir une telle mousse cohésive/solide, ces particules s'opposant au moussage ou ayant tendance à provoquer un effondrement de la mousse formée indépendamment). Le procédé revendiqué permet de surcroît le contrôle de la taille des bulles de la mousse et de la fraction d'air incorporée, autorisant également l'obtention de mousses allégées/de densité contrôlée. Les matériaux obtenus ne fissurent pas au séchage et subissent une densification réduite.

Le procédé selon l'invention peut comprendre une étape préalable de préparation du mélange de particules minérales précité (notamment par mise en suspension (de la poudre formée) des particules dans l'eau), ou ce mélange (en particulier aqueux) peut avoir été préparé préalablement indépendamment du procédé et être un mélange prêt à l'emploi incorporant lesdites particules.

Avantageusement, le mélange de particules est tel que l'extrait sec, et en particulier tel que la proportion de particules précitées, est d'au moins 15% en poids, notamment d'au moins 16% en poids du mélange, et est généralement inférieur(e) à 40%, notamment inférieur(e) à 35%, en poids du mélange.

La réalisation de la mousse comprenant les particules/le mélange de particules (à partir dudit mélange ou desdites particules) peut se faire:

- par moussage direct : c'est-à-dire par l'introduction d'un gaz dans le mélange de particules par diverses méthodes telles que : l'agitation mécanique, le bullage d'un gaz, par exemple à travers un fritté (plaque poreuse à travers laquelle on fait passer le gaz pour générer la mousse), le bullage in-situ d'un gaz dissous (par exemple du pentane) ou d'un gaz par réaction chimique, notamment par décomposition (par exemple du peroxyde d'hydrogène en eau et dioxygène), etc, et/ou

- par incorporation : c'est à dire l'incorporation au mélange de particules (en dispersion) d'une mousse aqueuse déjà préformée, par exemple préparée par moussage à l'aide d'une solution aqueuse dans laquelle on introduit un gaz par l'une des méthodes ci-dessus,

le moussage même se faisant généralement en présence d'au moins un tensioactif (ajouté dans le mélange de particules dans le cas du moussage direct, ou le tensioactif étant présent dans la solution que l'on fait mousser pour former la mousse aqueuse dans le cas de l'incorporation).

Avantageusement, dans le procédé selon l'invention, une seule étape de séchage est opérée après l'étape de mise en œuvre de la mousse (notamment aux alentours de 35-40°C ou plus, par exemple autour de 80°C); le procédé est en outre avantageusement dénué d'étape de frittage, une opération de séchage supplémentaire ou de frittage pouvant conduire à une densification du produit préjudiciable à l'obtention des propriétés thermiques recherchées.

Le produit isolant thermique selon l'invention intègre (ou comprend ou combine) avantageusement deux gammes de porosités différentes (ou distinctes), dont une première gamme (dite de macroporosité), constituée de pores (dits macropores) de diamètres (c'est-à-dire présentant une distribution de diamètres) compris entre 10 microns et 3 millimètres, en particulier compris entre quelques dizaines et quelques centaines de microns (et notamment entre 10 et 500 $\mu$m), et une seconde gamme (dite de porosité submicronique) constituée de pores (dits submicroniques) déjà évoqués précédemment. Ces deux porosités/types de pores se différentient significativement par leur taille (qualifiée en l'occurrence par leur diamètre), les pores d'une catégorie (tels que les pores submicroniques) étant présents entre les pores d'une autre catégorie (tels que les macropores). De façon avantageuse, seulement (ces) deux porosités/types de pores sont présents (ou au moins majoritaires) dans le produit, cependant il n'est pas exclu que le produit puisse comprendre plus de deux porosités/types de pores. Le diamètre permettant de qualifier les pores submicroniques est calculé à partir des mesures de volumes poreux par porosimétrie à intrusion de mercure, à l'aide de l'équation de Washburn, le diamètre des macropores étant mesuré par microscope électronique à balayage (MEB) ou par tomographie X.

Le produit présente, comme déjà évoqué en rapport avec les particules, des pores (et est formé de particules présentant des pores) submicroniques de diamètres entre 10 nm et 1 $\mu$m, notamment entre 100 nm et 1 $\mu$m (les diamètres variant dans ces limites selon les particules initiales utilisées, par exemple selon leur surface spécifique, la distribution de diamètres pouvant en outre être plus ou moins étroite ou resserrée), le volume poreux pour ces pores submicroniques étant avantageusement supérieur à 0.8 cm³/g (le volume poreux submicronique dans le produit pouvant diminuer légèrement par rapport à celui des particules initiales utilisées, mais restant de toutes façons supérieur à 0.8 cm³/g). Pour les macropores, le volume poreux est de préférence supérieur à 1 cm³/g (c'est-à-dire 1 cm³ par gramme de matériau), de préférence supérieur à 3 cm³/g, et en particulier varie de 5 à 15 cm³/g.

Le volume poreux pour les pores submicroniques ($V_{sm}$) est déterminé par porosimétrie à mercure réalisée sur des appareils de référence Pascal 140 et Pascal 440 commercialisés par la société Thermo Scientific, et est considéré comme étant égal au volume cumulé de mercure introduit dans les pores pour des pressions de mercure supérieures à 1.47 MPa (pression calculée par l'équation de Washburn -Washburn, 1921- pour un diamètre de pore de 1 micron) et allant notamment jusqu'à 400 MPa avec les appareils précités, les pores étant supposés cylindriques, en supposant la tension de surface du mercure égale à 480 dynes/cm et l'angle de contact particules minérales/mercure égal à 140°, le volume poreux étant donné en cm³ par gramme de matériau. Le volume poreux des macropores ($V_m$) est déterminé par la formule :

$$V_m = 1/\rho_a - 1/\rho_s - V_{sm}$$

$\rho_a$ étant la masse volumique apparente du matériau (correspondant au rapport de sa masse sur son volume), $1/\rho_a$ étant le volume spécifique du matériau, $\rho_s$ étant la masse volumique du squelette (partie du produit occupée par de la matière dense/sans pores), (majoritairement) minéral, mesurée par pycnomètre à hélium (norme ASTM C604- "standard test method for true specific gravity of refractory materials by gas-comparison pycnometer"), et $1/\rho_s$ étant le volume spécifique du squelette.

Le volume poreux total ($V_p= V_m + V_{sm}$) du matériau (ou produit) isolant thermique selon l'invention est avantageusement supérieur à 1.8 cm³/g, et préférentiellement compris entre 5.5 et 18 cm³/g.

La création d'une porosité submicronique (ou volume poreux à l'échelle sub-micronique) emprisonnant de l'air dans une structure présentant déjà des (macro)pores (cette macroporosité provenant en particulier du moussage et correspondant aux bulles d'air introduites), et dans les zones (ou "murs") entre lesdits (macro)pores (ces murs, de quelques micromètres d'épaisseur notamment, étant formés et stabilisés par les particules sélectionnées comme explicité précédemment), améliore les performances thermiques du produit, tout en donnant un produit comparativement plus léger du fait de la présence de ces pores supplémentaires, cette porosité supplémentaire dans les murs de la mousse étant apportée notamment par la porosité intra particulaire (initialement présente dans les particules utilisées et résultant en particulier de leur synthèse), et résultant également de l'empilement de ces particules poreuses pour constituer les murs de la mousse (porosité inter particulaire). Les mousses obtenues en particulier selon l'invention présentent des propriétés d'isolation thermique améliorées par rapport à des mousses inorganiques plus classiques de même densité, ou par rapport à des isolants cellulaires organiques courants de type polystyrène, tout en étant (plus) économiques et restant légères, et tout en présentant une meilleure résistance au vieillissement et au feu que des produits organiques aux performances d'isolation thermiques équivalentes. Les produits/mousses selon l'invention sont compatibles aussi bien pour une utilisation comme matériau de comblement, que pour une utilisation en surface, notamment en façade.

Le produit isolant thermique selon l'invention se présente ainsi selon un mode préféré sous forme d'(au moins) une mousse solide (généralement rigide) à base de particules poreuses et est, comme déjà évoqué, obtenu en particulier à partir du mélange d'au moins les éléments suivants : de l'eau (ou éventuellement une mousse aqueuse), des particules précitées (selon la définition de l'invention) de porosité submicronique (généralement en dispersion/suspension (dans (de) l'eau)), lesdites particules présentant (initialement, telles qu'introduites dans le mélange) préférentiellement une surface spécifique S d'au moins 5 m²/g (la surface spécifique étant donnée en m² par gramme de particule(s)), en particulier supérieure à 20 m²/g, et le cas échéant (au moins) un tensioactif et/ou éventuellement un liant organique et/ou un liant minéral et/ou des fibres (ou renforts), etc, comme explicité ultérieurement.

Les performances thermiques de l'isolant selon l'invention se traduisent par des valeurs de conductivité thermique $\lambda$ (globale) inférieures à 40 mW/m.K, notamment comprises entre 20 et 40 mW/m.K (environ), en particulier inférieures à 35 mW/m.K (environ), descendant notamment jusqu'à 30 mW/m.K, voire encore moins (les performances thermiques étant d'autant meilleures que la conductivité thermique est basse). La conductivité thermique $\lambda$ (en W/m.K) représente la quantité de chaleur passant au travers de l'isolant (d'un mètre d'épaisseur, par m² et lorsque la différence de température entre les deux faces est de 1°K). Les valeurs de conductivité thermique $\lambda$ (comparées à pression et température identiques, en particulier à pression atmosphérique (1 bar) et température ambiante, sont mesurées dans le cadre de l'invention avec un fluxmètre de la série HFM 436 de la société NETZSCH™ en suivant les protocoles établis par les normes ASTM C518 et ISO 8301. La température de caractérisation est de l'ordre de 25 °C, et les mesures sont effectuées à pression atmosphérique, la précision des mesures étant estimée à 5%.

Le produit selon l'invention est plus facile d'obtention que des aérogels (lesquels en particulier n'engendrent pas la double porosité précédemment définie) ou d'autres mousses inorganiques, obtenus en partant de précurseurs/matières premières et en opérant une réaction chimique pour former la substance minérale les formant (tandis que, dans le cas du produit selon l'invention, la substance minérale employée - les particules- est déjà formée et simplement mise en forme sans recourir à des traitements visant à les dégrader ou à modifier leur composition chimique, comme il apparait dans le procédé selon l'invention). La structure poreuse du produit selon l'invention et/ou ledit produit est ainsi avantageusement formée sans réaction chimique ni altération comme précitées. La même observation peut être faite en comparaison de structures ou mousses méso- ou nanoporeuses existants dans d'autres domaines ou applications (par exemple utilisées pour des tamis moléculaires et obtenues par exemple par voie sol-gel à partir de précurseurs), qui, de spécificités et de contraintes différentes, résultent en particulier de réactions chimiques et/ou d'opérations mécaniques de dégradation.

La masse volumique apparente du produit ou matériau selon l'invention est avantageusement inférieure à 300 kg/m$^3$, cette masse volumique pouvant varier selon la formulation (additifs, pH...) et les conditions de moussage (temps de moussage, vitesse d'agitation, géométrie de cuve et pale, etc.). Comme évoqué précédemment, la masse volumique est déterminée en faisant le rapport de la masse d'un volume donné du matériau, sur ledit volume. Généralement, la masse volumique du produit isolant selon l'invention est inférieure ou égale à 200 kg/m$^3$, en particulier inférieure à 150 kg/m$^3$, avantageusement inférieure à 130 kg/m$^3$, voire inférieure à 100 kg/m$^3$.

Le produit ou matériau selon l'invention est majoritairement (à au moins 80% en poids, voire au moins 90%), voire uniquement, minéral/inorganique (les matières organiques éventuellement présentes pouvant être le cas échéant un liant organique, un greffage organique, etc.) ce qui permet d'assurer notamment une bonne tenue au feu. Le produit ou matériau est en outre essentiellement (à au moins 80% en poids, voire au moins 90%), formé des particules précitées telles que mises en forme, en particulier dans une structure de mousse. Ces particules sont solides et poreuses, et sont utilisées directement pour former le produit sans modification de leur formule.

Les particules précitées sont généralement (initialement) sous forme d'une poudre (chaque grain étant généralement formé d'un ensemble de particules), et présentent une granulométrie variant de préférence de 0.5 $\mu$m à 200 $\mu$m (notamment entre 1 et 100 $\mu$m) avec un diamètre médian D50 généralement de l'ordre de quelques micromètres, ce diamètre étant mesuré par analyse granulométrique par diffraction laser selon la norme ISO 13320-1 : 2000 notamment. La poudre est le cas échéant mise en dispersion, en particulier dans l'eau (de l'huile notamment pouvant également être ajoutée, par exemple pour un effet tensioactif et de consolidation, et/ou un liant notamment), et utilisée (ou incorporée) sous forme de ladite dispersion pour former le produit selon l'invention, le taux de particules mis en dispersion/suspension (les particules se dispersant dans le médium) dans l'eau étant avantageusement d'au moins 15%, en particulier d'au moins 16% en poids (par rapport à la dispersion), comme évoqué précédemment.

La surface spécifique initiale S de ces particules est avantageusement supérieure à 5 m$^2$/g, en particulier supérieure à 10 m$^2$/g, notamment supérieure à 20 m$^2$/g, cette surface spécifique allant en particulier jusqu'à 30 m$^2$/g.

Les surfaces spécifiques, exprimées en m$^2$/g, sont mesurées par adsorption d'azote (théorie de l'adsorption multiple des gaz à l'aide de déterminations de Brunauer, Emmett et Teller- méthode BET) conformément à la norme ISO 9277 : 2010.

Comme indiqué précédemment, les particules sont de préférence des particules de carbonates répondant à la définition selon l'invention, notamment des particules de carbonates obtenu(e)s par synthèse, en particulier par précipitation, ou encore des particules de carbonates naturels ayant été traités chimiquement (par exemple par attaque acide) pour créer de la porosité, et/ou sont de préférence des particules de diatomées répondant à la définition selon l'invention. La structure de ces composés est préférentiellement (entre-autres) sous forme de plaquettes plus ou moins agrégées et/ou sous forme plus ou moins sphérique (notamment sous forme ressemblant à des rosaces ou roses des sables) et/ou sous forme de disques, comme indiqué précédemment. Ces particules sont le cas échéant obtenues par broyage(s) de la matière (par exemple de carbonates), synthétisée ou naturelle, se trouvant éventuellement à l'origine sous forme de gros agglomérats ou morceaux, pour obtenir les particules de taille souhaitée (le cas échéant formée d'agglomérats de taille plus petite) sans dégradation néanmoins d'autres caractéristiques de cette matière (porosité, etc.) Les grains de poudre obtenus le cas échéant après broyage, ou existant naturellement, utilisés pour fournir les particules selon l'invention sont formés d'ensembles, éventuellement d'agglomérats, desdites particules, comme vu précédemment.

Outre les particules minérales, le matériau selon l'invention est formé à partir d'eau ou d'une phase aqueuse (la présence d'un autre médium également, par exemple de l'huile et/ou un alcool, notamment du glycérol, n'étant pas exclue), médium(s) que l'on (a) fait mousser pour former une mousse aqueuse (ou liquide d'aspect savonneux, obtenu par un empilement désordonné de bulles de gaz dans une phase aqueuse), la phase aqueuse de départ non encore moussée comprenant en outre avantageusement au moins un composé tensioactif comme indiqué précédemment.

Comme tensioactif (ou agent moussant), on peut utiliser au moins un (sel de) tensioactif anionique, en particulier sélectionné parmi l'un des composés suivants de formule générale : R-X⁻, Y⁺, pour lequel R est une chaîne aliphatique de 10 à 24 atomes de carbones, X⁻ est un groupement portant une charge négative (groupement carboxylate, sulfate, sulfonate, etc.), et Y⁺ est un contre cation sélectionné parmi les groupements ammonium, sodium et potassium, par exemple des sels de carboxylates comportant 12 à 24 atomes de carbone, sélectionnés notamment parmi les sels de myristate, de palmitate, de stéarate, d'oléate, ou de la base conjuguée de l'acide béhénique, ou des carboxylates issus du traitement des acides gras du suif, ou encore d'autres bases conjuguées d'acides gras comme par exemple les savons/gels douche comprenant des acides gras issus de sources naturelles telles que le suif, l'huile de coco, etc, par exemple des tensioactifs tels que le stéarate d'ammonium, etc.

On peut également ou alternativement utiliser au moins un sel de tensioactif cationique sélectionné par exemple parmi les sels d'alkyltriméthyle ammonium contenant un groupement alkyle comportant 10 à 22 atomes de carbone, en particulier parmi au moins l'un des composés suivants : le bromure (ou chlorure) de dodécyltriméthylammonium, le bromure (ou chlorure) de tetradecyltriméthylammonium, le bromure (ou chlorure) d'hexadecyltriméthyl-ammonium, le bromure (ou chlorure) d'octadécyltriméthylammonium, le bromure (ou chlorure) de cétyltriméthylammonium, le chlorure de cétylbenzyldimethyl-ammonium, le bromure de cétyltriéthylammonium, le chlorure de tallowtriméthylammonium, etc.

Dans le cas de l'utilisation d'un tensioactif anionique et d'un tensioactif cationique conjointement, la préparation d'une mousse aqueuse peut être faite par exemple comme décrit dans la demande WO96/25475 ou à partir des kits bicomposants commercialisés par la société Allied Foam (référencés par exemple : 425A et 510B), constitués d'un premier mélange aqueux contenant un tensioactif anionique et d'un second mélange aqueux comprenant un tensioactif cationique et un latex, etc.

On peut également utiliser comme tensioactif(s) un ou plusieurs zwittérions. Parmi les zwittérions, on peut notamment citer des acides aminés ou dérivés, des molécules synthétisées à partir d'acides aminés, etc.

Généralement, le mélange (pour l'obtention du produit isolant ou le mélange de particules) ou la (phase aqueuse donnant la) mousse aqueuse comprend moins de 5% (en poids), avantageusement moins de 2%, voire même moins de 1% de tensioactif de préférence anionique, et/ou de zwittérion(s) (le taux minimal de tensioactif(s) étant en général d'au moins 0.08% par rapport au mélange ou d'au moins 0.1% par rapport à l'eau).

On peut également ajouter d'autres additifs (généralement dans le mélange de particules ou le mélange utilisé pour obtenir la mousse ou le produit selon l'invention ou dans la mousse), comme des agents rhéologiques (plastifiant, tel que la glycérine, etc.), des agents de surface, des charges minérales, ou d'autres matériaux renforçant la tenue mécanique (fibres de verre ou organiques, silicate, gypse, ciment, liants organiques de type latex comme explicité ci-après,...), ou limitant la disproportion des bulles et réduisant leur taille (le moussage étant par exemple opéré sous atmosphère de perfluorohexane), etc.

Notamment, pour prévenir le mûrissement, on peut avantageusement ajouter des co-tensioactifs de type tensioactifs cationiques ou polymères cationiques, ou saponines, ou des polymères non ioniques de type éther de cellulose (tel que l'hydroxypropyl methylcellulose).

Le mélange (pour l'obtention du produit isolant ou le mélange de particules) peut également comprendre au moins un liant, organique et/ou minéral, utilisé, par exemple, pour permettre la liaison des particules entre elles et/ou la liaison des particules au reste de la structure du matériau.

Pour renforcer mécaniquement la mousse notamment, le liant peut être un liant organique comme indiqué précédemment; en particulier, il peut être avantageusement un latex (notamment choisi parmi ceux ayant tendance à former des films), en particulier une émulsion ou dispersion aqueuse d'une ou plusieurs substances polymères naturelles ou synthétiques, généralement thermoplastiques. Ce liant latex a préférentiellement une température de transition vitreuse Tg inférieure à 50°C, en particulier entre - 50°C et 25°C, de préférence entre - 20°C et 10°C, avantageusement entre - 10°C et 0°C, et a préférentiellement une température de filmification inférieure à la température ambiante, en vue d'obtenir la tenue recherchée pour les matériaux isolants à appliquer sur un support dans le domaine de la construction de bâtiments notamment. Le latex peut renfermer un (co)polymère de type vinylique (par exemple à base d'acétate de vinyle, en particulier d'homopolymère de polyacétate de vinyle, ou de copolymère d'acétate de vinyle et d'acide et/ou ester (méth)acrylique, maléïque, d'oléfine et/ou de chlorure de vinyle, ou à base de copolymère chlorure de vinyle/éthylène), ou de type acrylique (notamment un copolymère acrylonitrile/ester acrylique, ou styrène/acide ou ester acrylique silanisé et/ou dérivé d'acide carboxylique). Le latex peut notamment être un copolymère styrène-acrylique ou tout acrylique. Ces latex sont par exemple ceux commercialisés par la société BASF dans la gamme référencée par la dénomination Acronal®, en particulier l'Acronal® S 400.

Notamment, le produit isolant thermique selon l'invention peut être préparé à partir d'au moins les éléments suivants, dans les quantités exprimées en pourcentage pondéral par rapport à la masse totale du mélange : de 43 à 85 % d'eau, de 15 à 37% de particules minérales précitées et de 0 à 20 %, notamment de 1 à 20%, d'additif(s) (liant, tensioactif, etc.).

L'étape de mise en forme comprend généralement des opérations de coulée ou moulage du matériau (en particulier de la mousse) comprenant les particules dans des cavités de forme ou section appropriée(s), ou de projection du matériau (en particulier de la mousse) sur une surface ou paroi. Le terme moulage est à prendre au sens large et recouvre toute forme de conformation, telles que la coulée en moule ouvert, l'extrusion à travers une filière et découpe de l'extrudât, etc, le séchage étant généralement consécutif à la mise en forme.

Le procédé selon l'invention avantageusement ne nécessite pas et même exclut après séchage tout traitement thermique de consolidation du matériau pouvant densifier le produit et dégrader les performances thermiques.

Le produit isolant thermique obtenu est solide (et généralement rigide) et multi- (en particulier bi-) poreux. Il est généralement (conçu) sous forme d'un panneau dont l'épaisseur est au moins égale à 5 mm. Il peut aussi être obtenu sous forme d'au moins une couche (appliquée par exemple sur une plaque de plâtre), ou le matériau à l'état encore humide peut être imprégné ou étalé sur un voile (par exemple non tissé...), ou le matériau peut être associé à une matrice de fibres ou autre couche, etc.

La présente invention concerne également l'utilisation du produit isolant selon l'invention dans le domaine de la construction, pour isoler notamment des parois de bâtiments ou isoler sous toiture.

La présente invention et ses avantages seront mieux compris à la lecture des exemples décrits ci-après, à titre illustratif et non limitatif :

Sélection des particules :

Avant réalisation de la mousse, une première étape de sélection des particules a consisté à réaliser une galette à partir de chaque échantillon de particules de la façon suivante : on met la poudre (particules) minérale considérée dans l'eau (à un taux de poudre de 16% en poids), on coule le mélange dans une coupelle en aluminium (ou un moule en téflon) et on fait sécher à 40°C.

Les particules comparées étaient les suivants :

- des particules de (terres de) diatomées (origine du gisement: Mexico, Mexique) commercialisées sous la référence CeltiX par la Société Imerys, et comprenant 92,8% de silice amorphe, 3.6% d'$Al_2O_3$, 1.2% de $Fe_2O_3$, 1.2% de CaO, 0.4% de MgO, 0.6% de $Na_2O+K_2O$, 0.2% de $TiO_2$ et 0.1% de $P_2O_5$. Ces particules présentaient une structure (observée par microscope électronique à balayage) en forme de disques/sphères, une taille de plusieurs microns (n'excédant pas 22 $\mu$m), des pores submicroniques de diamètres supérieurs à 100 nm et inférieurs à 1 micron et de volume poreux de 0.88 cm$^3$/g, et une masse volumique en vrac de 235 kg/m$^3$ (particules A).
- des particules d'un carbonate mixte calco-magnésien présentant une structure sous forme de plaquettes plus ou moins agrégées et au moins partiellement agglomérées sous forme de roses des sables, comprenant 54% de $CaCO_3$, quasiment exclusivement sous la forme de calcite (avec quelques traces d'aragonite), 40 % d'hydromagnésite, 5% de brucite et 1,0 % de portlandite, ces particules présentant une taille de 1.61 $\mu$m (d50), des pores submicroniques de diamètres supérieurs à 100 nm et inférieurs à 1 micron et de volume poreux de 1.53 cm$^3$/g, une surface spécifique de 27,3 m$^2$/g, et une masse volumique en vrac de 210 kg/m$^3$ (particules B);
- des particules d'un carbonate, commercialisé sous la référence Socal P2 par la société Solvay, ce carbonate étant formé de calcite pure, ces particules présentant une structure en forme de scalénoèdres, une taille de l'ordre de 180 à 500 nm, des pores submicroniques de diamètres supérieurs à 100 nm et inférieurs à 1 micron et de volume poreux de 0.4 cm$^3$/g, et une masse volumique en vrac de 480 kg/m$^3$ (particules C).

On a calculé le retrait en volume des galettes après séchage, et observé des contractions en volume (densifications) bien plus importantes pour celle obtenue avec les particules C (masse volumique de la galette obtenue supérieure à 1000 kg/m$^3$) que pour celle obtenue avec les particules A (masse volumique de la galette obtenue égale à 365 kg/m$^3$) ou celle obtenue avec les particules B (masse volumique de la galette obtenue égale à 405 kg/m$^3$).

A titre de comparaison également, on a essayé de former une galette en procédant comme décrit précédemment à partir de particules d'aérogels (de silice) commercialisés sous la référence P300 par la société Cabot, ces particules présentant une taille de l'ordre de 1 à 4 mm et une masse volumique en vrac de l'ordre de 65 à 85 kg/m$^3$ (particules D). Cependant, il n'a pas été possible avec les aérogels d'obtenir une telle galette, la structure obtenue n'étant pas cohésive ni manipulable et ne permettant pas les mesures précédentes.

Conformément à l'invention, on a choisi les particules A et les particules B pour obtenir les produits améliorés selon l'invention.

Exemple 1 selon l'invention:

Dans cet exemple, on a fabriqué une mousse de diatomées comme suit :
On a dispersé dans 320 g d'eau 80 g des particules (sous forme de poudre) de diatomées A sélectionnées ci-avant, à l'aide d'une pale IKA (agitateur à hélice), puis on a ajouté à cette dispersion 14.24 g d'un latex (liant organique) commercialisé par la société BASF sous la référence Acronal S400. On a homogénéisé le mélange à l'aide d'une pale IKA à la vitesse de 1880 tr/min pendant 5 minutes.

On a ajouté 1.31 g de tensioactif de type zwittérion à base de cocamidopropyl betaïne (ou CAPB, à base de lauramidopropyl betaine ou {[3-(dodecanoylamino)propyl](dimethyl)ammonio} acetate) en mélangeant à faible vitesse à l'aide d'un robot ménager de la marque Kenwood, puis on a fait mousser le mélange par action mécanique à l'aide du robot à la vitesse maximale du robot pendant 60 min, puis on a agité à nouveau à vitesse minimale pendant 15 min.

La mousse humide a ensuite été coulée dans un moule en téflon et placée à l'étuve à 35°C pendant une nuit.

Le produit selon l'invention obtenu, sous forme d'une mousse solide/rigide, présentant deux gammes de porosités (en particulier des macropores de diamètres compris entre 10 $\mu$m et 3 mm, et des pores submicroniques de diamètres supérieurs à 100 nm et inférieurs à 1 micron), a été caractérisé selon les méthodes mentionnées plus avant dans le texte, les valeurs obtenues étant les suivantes :

- Masse volumique : 86 kg/m$^3$;
- volume poreux submicronique : 0.8 cm$^3$/g
- Conductivité thermique : 33 mW/m.K +/-10%

Les valeurs indiquées montrent que le produit inorganique isolant thermique obtenu présentait une faible masse volumique en même temps que des performances thermiques avantageuses.

Exemple 2 selon l'invention:

Dans cet exemple, on a fabriqué une mousse de carbonates comme suit :
On a dispersé dans 161.25 g d'eau 26.25 g des particules (sous forme de poudre) de carbonates B sélectionnées ci-avant, à l'aide d'une pale IKA (agitateur à hélice), puis on a ajouté à cette dispersion 5.83 g d'un latex (liant organique) commercialisé par la société BASF sous la référence Acronal S400. On a homogénéisé le mélange à l'aide d'une pale IKA à la vitesse de 1500 tr/min.

Dans un second récipient, on a préparé une mousse aqueuse à partir de deux solutions de tensioactifs commercialisées par la société Allied Foam sous les références AFT 425 A et AFT 510B et composées comme suit :

- référence AFT 425A constituée de (pourcentages pondéraux):

  - Mélange de tensioactifs cationiques appartenant à la classe des alkyls à longues chaîne : 50-60%
  - Mélange de tensioactifs phénoxyle non ionique : 10-20%
  - Ethanol : 5-8%
  - Eau : 12-35%

- référence AFT 510B constituée de:

  - Mélange de polymères acrylique : 25-35%
  - Mélange de tensioactifs anioniques appartenant à la classe des acides gras : 15-30%
  - Eau : 35-60%

On a prélevé 10 g de AFT425A auxquels on a ajouté 100g d'eau. On a fait mousser le mélange par action mécanique à l'aide d'un robot ménager de la marque Kenwood pendant 3 min à vitesse maximale. On a ajouté ensuite sous agitation en environ 1 min, 20 g de la solution AFT 510 B et on a mélangé l'ensemble pendant 3 min 30 à vitesse maximale à l'aide du robot ménager.

Pour préparer la mousse de carbonate, on a prélevé 9.45 g de la mousse liquide résultante que l'on a introduit à la spatule dans la dispersion aqueuse à base de carbonate et d'Acronal S400. On a homogénéisé l'ensemble à l'aide de la pale IKA à la vitesse de 600 tr/min.

La mousse humide a ensuite été coulée dans un moule en téflon et placée à l'étuve à 40°C pendant une nuit.

Le produit selon l'invention obtenu, sous forme d'une mousse solide/rigide, présentant deux gammes de porosités (en particulier des macropores de diamètres compris entre 10 $\mu$m et 3 mm, et des pores submicroniques de diamètres supérieurs à 100 nm et inférieurs à 1 micron), a été caractérisé selon les méthodes mentionnées plus avant dans le texte, les valeurs obtenues étant les suivantes :

- Masse volumique : 97 kg/m$^3$;
- volume poreux submicronique : 1.08 cm$^3$/g
- Conductivité thermique : 30 mW/m.K +/-5%

Les valeurs indiquées montrent que le produit inorganique isolant thermique obtenu présentait une faible masse volumique en même temps que des performances thermiques avantageuses.

Exemple comparatif 1 :

On a procédé comme dans l'exemple 2, en remplaçant le carbonate de l'exemple 2 par le carbonate C non sélectionné précédemment. Il n'a pas été possible d'obtenir un échantillon avec une masse volumique équivalente présentant une tenue suffisante pour pouvoir être manipulé et permettre une mesure de conductivité thermique.

Exemple comparatif 2:

On a procédé sur le modèle de l'exemple 1, en essayant d'obtenir une mousse à partir d'aérogels comme suit :
On a préparé une solution contenant 120 g d'eau et 7.5 g d'un tensioactif (pour rendre les particules d'aérogel compatibles avec l'eau) cationique (à base d'oxyde d'alkyldiméthylamine ramifié) commercialisé sous la référence Barlox 12 par la société Lonza.

On a dispersé dans cette solution 33.75 g des particules d'aérogels D mentionnées précédemment à l'aide de la pale IKA à 1500 tr/min jusqu'à mouiller l'ensemble des particules, puis on a ajouté à la pâte obtenue 24 g du latex Acronal S400. On a essayé de faire mousser le mélange par action mécanique à l'aide du robot ménager Kenwood à vitesse maximale pendant 10 min.

Il n'a cependant pas été possible d'obtenir une mousse, le mélange gardant l'aspect d'une pâte. En coulant le mélange dans le moule en téflon et le plaçant à l'étuve à 40 °C pendant la nuit, on a obtenu un produit se présentant, non pas sous forme d'une mousse rigide ou solide, mais sous la forme d'un empilement de particules d'aérogels compactées liées par le liant latex présentant une masse volumique de l'ordre de 200 kg/ m$^3$.

Exemple comparatif 3:

On a procédé comme dans l'exemple 2 selon l'invention, en remplaçant les particules de carbonate dudit exemple par les particules d'aérogels D.

Après dispersion des particules d'aérogel dans l'eau, on a obtenu une pâte humide (et non une dispersion fluide), le mélange obtenu après ajout du liant latex restant sous forme d'une pâte. Après introduction de la mousse aqueuse dans cette pâte, on a observé en cas d'arrêt de l'agitation une séparation de phases progressive avec une phase aqueuse fluide dessous et des particules d'aérogels surnageant. En coulant après l'agitation le mélange dans un moule et le plaçant une nuit à l'étuve à 40°C, on a obtenu un produit très fragile se présentant, non pas sous forme d'une mousse rigide ou solide, mais sous forme d'un empilement de particules d'aérogels agglomérées par compaction et liées par le liant latex, l'incorporation des particules d'aérogel ayant entrainé l'effondrement de la mousse aqueuse préformée.

En outre, l'ajout lors de la dispersion des particules dans l'eau, de 5.83 g de tensioactif cationique Barlox 12 n'a pas changé l'aspect du mélange obtenu (pâte humide et non dispersion fluide), ni l'observation, après introduction de la mousse aqueuse et arrêt de l'agitation, d'une séparation de phases (phase aqueuse fluide et particules d'aérogels surnageant), et a abouti après séchage à un produit ne présentant pas une tenue suffisante pour permettre sa manipulation, les particules d'aérogel étant encore plus faiblement agglomérées par le liant. Il n'a donc pas été possible d'obtenir un échantillon de masse volumique équivalente à celle des exemples selon l'invention présentant une tenue suffisante pour pouvoir être manipulé et permettre une mesure de conductivité thermique.

Les produits selon l'invention sont particulièrement appropriés pour l'isolation thermique haute performance en particulier dans le domaine de la construction pour isoler les parois (extérieures ou intérieures) de bâtiments ou isoler sous toiture. Les produits selon l'invention ont également des propriétés ou peuvent être utilisés avec avantages dans l'isolation acoustique, et les applications d'allègement de matériaux.

**Revendications**

1. Produit isolant thermique, en particulier au moins sous forme d'une mousse solide, ce produit étant formé à partir de particules minérales, autres que des aérogels, de porosité sub-micronique telles que leur masse volumique en vrac est inférieure à 280 kg/m$^3$, et telles que la masse volumique de la galette obtenue par séchage à 40 °C d'une dispersion de 16% en poids de ces particules dans l'eau est inférieure à 600 kg/m$^3$.

2. Produit isolant thermique selon la revendication 1, **caractérisé en ce que** les particules présentent une taille d'au moins 500 nm, de préférence d'au moins 750 nm, de façon particulièrement préféré d'au moins 900 nm, en particulier d'au moins 1 μm, notamment de quelques micromètres.

3. Produit isolant thermique selon l'une des revendications 1 à 2, **caractérisé en ce que** le volume poreux des pores submicroniques des particules est d'au moins 0.8 cm$^3$/g.

4. Produit isolant thermique selon l'une des revendications 1 à 3, **caractérisé en ce que** les particules sont de surface spécifique S supérieure à 5 m$^2$/g, en particulier supérieure à 20 m$^2$/g

5. Produit isolant thermique selon l'une des revendications 1 à 4, **caractérisé en ce que** sa masse volumique est inférieure à 300 kg/m$^3$, en particulier inférieure à 200 kg/m$^3$, notamment inférieure à 150 kg/m$^3$, voire inférieure à 100 kg/m$^3$.

6. Produit isolant thermique selon l'une des revendications 1 à 5, **caractérisé en ce qu'**il intègre deux gammes de porosités différentes, dont avantageusement une première gamme constituée de macropores de diamètres compris entre 10 microns et 3 mm, et une seconde gamme constituée de pores submicroniques de diamètres entre 10 nm et 1 μm, le volume poreux total du matériau isolant thermique étant avantageusement supérieur à 1.8 cm$^3$/g.

7. Produit isolant thermique selon l'une des revendications 1 à 6, **caractérisé en ce qu'**il est majoritairement inorganique.

8. Produit isolant thermique selon l'une des revendications 1 à 7, **caractérisé en ce que** lesdites particules sont des particules de carbonates, en particulier calco-magnésiens, notamment mixtes et/ou des particules de diatomées.

**9.** Produit isolant thermique selon l'une des revendications 1 à 8, **caractérisé en ce que** la structure des particules, observée par microscope électronique à balayage, est sous forme de plaquettes ou rosaces ou sphères ou disques ou cylindres, formé(e)s le cas échéant d'agrégats et/ou d'agglomérats.

**10.** Produit isolant thermique selon l'une des revendications 1 à 9, **caractérisé en ce qu'**il est obtenu à partir du mélange d'au moins les éléments suivants : de l'eau ou une mousse aqueuse, des particules, autres que des aérogels, de porosité submicronique telles que leur masse volumique en vrac est inférieure à 280 kg/m$^3$, et telles que la masse volumique de la galette obtenue par séchage à 40 °C d'une dispersion de 16% en poids de ces particules dans l'eau est inférieure à 600 kg/m$^3$, lesdites particules présentant préférentiellement une surface spécifique S supérieure à 5 m$^2$/g, en particulier supérieure à 20 m$^2$/g, et le cas échéant un liant organique et/ou un liant minéral, et/ou un tensioactif et/ou des renforts.

**11.** Produit isolant thermique selon l'une des revendications 1 à 10, caractérisé en qu'il est obtenu à partir d'un mélange comprenant également un liant organique, en particulier un liant latex.

**12.** Procédé de fabrication d'un produit isolant thermique, comprenant les étapes suivantes :

- au moins une étape de réalisation d'une mousse à partir d'un mélange de particules minérales, autres que des aérogels, de porosité sub-micronique telles que leur masse volumique en vrac est inférieure à 280 kg/m$^3$, et telles que la masse volumique de la galette obtenue par séchage à 40 °C d'une dispersion de 16% en poids de ces particules dans l'eau est inférieure à 600 kg/m$^3$;
- au moins une étape de mise en forme, notamment par moulage ou coulage ou projection de cette mousse ;
- au moins une étape de séchage au moins partiel de la mousse ou du matériau ainsi obtenu.

**13.** Procédé selon la revendication 12, caractérisé en ce les particules présentent une surface spécifique S supérieure à 5 m$^2$/g.

**14.** Procédé selon l'une des revendications 12 ou 13, **caractérisé en ce qu'**il incorpore au moins une étape de préparation dudit mélange de particules minérales.

**15.** Procédé selon l'une des revendications 12 à 14, caractérisé en ce le mélange de particules est tel que l'extrait sec, et de préférence tel que la proportion de particules, est d'au moins 15% en particulier d'au moins 16% en poids du mélange.

**16.** Procédé selon l'une des revendications 12 à 15, **caractérisé en ce que** l'on ajoute dans le mélange de particules ou dans la mousse au moins un additif tel qu'un tensioactif, un liant organique ou inorganique, un agent rhéologique, un agent de surface et/ou des renforts.

**17.** Procédé selon l'une des revendications 12 à 16, **caractérisé en ce que** l'on ajoute dans le mélange de particules ou dans la mousse un liant organique de type latex.

**18.** Utilisation du produit selon l'une des revendications 1 à 11 pour l'isolation thermique de bâtiments.

**Patentansprüche**

**1.** Wärmedämmprodukt, insbesondere mindestens in Form eines festen Schaums, wobei dieses Produkt aus Mineralpartikeln hergestellt ist, die keine Aerogele sind, mit einer derartigen submikronischen Porosität, dass ihre Dichte im losen Gebinde unter 280 kg/m$^3$ liegt, und so, dass die Schüttdichte des durch Trocknung bei 40 °C erhaltenen Wafers bei einer Dispersion dieser Partikel von 16 Gew.-% im Wasser unter 600 kg/m$^3$ liegt.

**2.** Wärmedämmprodukt nach Anspruch 1, **dadurch gekennzeichnet, dass** die Partikel eine Größe von mindestens 500 nm, vorzugsweise von mindestens 750 nm, besonders vorzugsweise von mindestens 900 nm, insbesondere von mindestens 1 μm, besonders von einigen Mikrometern aufweisen.

**3.** Wärmedämmprodukt nach einem der Ansprüche 1 bis 2, **dadurch gekennzeichnet, dass** das Porenvolumen der submikronischen Poren der Partikel mindestens 0,8 cm$^3$/g beträgt.

**4.** Wärmedämmprodukt nach einem der Ansprüche 1 bis 3, **dadurch gekennzeichnet , dass** die Partikel eine spezifische Oberfläche S von größer als 5 m$^2$/g, insbesondere von größer als 20 m$^2$/g aufweisen

**5.** Wärmedämmprodukt nach einem der Ansprüche 1 bis 4, **dadurch gekennzeichnet, dass** die Schüttdichte unter 300 kg/m$^3$, insbesondere unter 200 kg/m$^3$, besonders unter 150 kg/m$^3$ beziehungsweise unter 100 kg/m$^3$ liegt.

**6.** Wärmedämmprodukt nach einem der Ansprüche 1 bis 5, **dadurch gekennzeichnet, dass** es zwei unterschiedliche Porositätsbereiche beinhaltet, davon vorteilhafterweise einen ersten Bereich, bestehend aus Makroporen mit Durchmessern, die zwischen 10 Mikrometer und 3 mm liegen, und einen zweiten Bereich, bestehend aus submikronischen Poren mit Durchmessern zwischen 10 nm und 1 $\mu$m, wobei das Gesamtporenvolumen des Wärmedämmmaterials vorteilhafterweise über 1,8 cm$^3$/g liegt.

7. Wärmedämmprodukt nach einem der Ansprüche 1 bis 6, **dadurch gekennzeichnet, dass** es mehrheitlich anorganisch ist.

8. Wärmedämmprodukt nach einem der Ansprüche 1 bis 7, **dadurch gekennzeichnet, dass** es sich bei den Partikeln um Karbonatpartikel handelt, insbesondere Kalzium-Magnesium-Karbonate, insbesondere gemischt und/oder Diatomeepartikel.

9. Wärmedämmprodukt nach einem der Ansprüche 1 bis 8, **dadurch gekennzeichnet, dass** sich die Struktur der Partikel, beobachtet unter Rasterelektronenmikroskop, in Form von Plättchen oder Rosetten oder Kugeln oder Scheiben oder Zylinder zeigt, die ggf. aus Aggregaten und/oder Agglomeraten gebildet sind.

10. Wärmedämmprodukt nach einem der Ansprüche 1 bis 9, **dadurch gekennzeichnet, dass** es aus einem Gemisch aus mindestens nachfolgenden Elementen erhalten wird: Wasser oder einem wässrigen Schaum, Partikeln, die keine Aerogele sind, mit einer derartigen submikronischen Porosität, dass ihre Schüttdichte im losen Gebinde unter 280 kg/m$^3$ liegt, und so, dass die Dichte des durch Trocknung bei 40 °C erhaltenen Wafers bei einer Dispersion dieser Partikel von 16 Gew.-% im Wasser unter 600 kg/m$^3$ liegt, wobei die Partikel vorzugsweise eine spezifische Oberfläche S von größer als 5 m$^2$/g, insbesondere größer als 20 m$^2$/g und ggf. ein organisches Bindemittel und/oder ein mineralisches Bindemittel und/oder ein Tensid und/oder Verfestigungsmittel enthalten.

11. Wärmedämmprodukt nach einem der Ansprüche 1 bis 10, **dadurch gekennzeichnet, dass** es aus einem Gemisch erhalten wird, das auch ein organisches Bindemittel, insbesondere ein Latexbindemittel umfasst.

12. Verfahren zur Herstellung eines Wärmedämmprodukts, das die folgenden Schritte umfasst:

    - mindestens einen Realisierungsschritt eines Schaums, ausgehend von einem Gemisch aus Mineralpartikeln, die keine Aerogele sind, mit einer derartigen submikronischen Porosität, dass ihre Dichte im losen Gebinde unter 280 kg/m$^3$ liegt, und so, dass die Schüttdichte des durch Trocknung bei 40 °C erhaltenen Wafers bei einer Dispersion dieser Partikel von 16 Gew.-% im Wasser unter 600 kg/m$^3$ beträgt;
    - mindestens einen Schritt des Formgebens, insbesondere durch Formen oder Gießen oder Sprühen dieses Schaums;
    - mindestens einen Schritt des zumindest partiellen Trocknens des Schaums oder des so erhaltenen Materials.

13. Verfahren nach Anspruch 12, **dadurch gekennzeichnet, dass** die Partikel eine spezifische Oberfläche S von größer als 5 m$^2$/g aufweisen.

14. Verfahren nach einem der Ansprüche 12 oder 13, **dadurch gekennzeichnet, dass** es mindestens einen Vorbereitungsschritt des Mineralpartikelgemischs umfasst.

15. Verfahren nach einem der Ansprüche 12 bis 14, **dadurch gekennzeichnet, dass** das Partikelgemisch derart ist, dass der Trockenextrakt, und vorzugsweise derart, dass der Anteil an Partikeln mindestens 15 Gew.-%, insbesondere mindestens 16 Gew.-% des Gemischs beträgt.

16. Verfahren nach einem der Ansprüche 12 bis 15, **dadurch gekennzeichnet, dass** dem Partikelgemisch oder dem Schaum mindestens ein Additiv zugesetzt wird wie beispielsweise ein Tensid, ein organisches oder anorganisches Bindemittel, ein rheologisches Mittel, ein Oberflächen- und/oder Verfestigungsmittel.

17. Verfahren nach einem der Ansprüche 12 bis 16, **dadurch gekennzeichnet, dass** dem Partikelgemisch oder dem Schaum ein organisches Bindemittel vom Typ Latex zugesetzt wird.

18. Verwendung des Produkts nach einem der Ansprüche 1 bis 11 zur Wärmedämmung von Gebäuden.

**Claims**

1. A thermal insulation product, in particular at least in the form of a solid foam, this product being formed from mineral particles, other than aerogel particles, with a submicron porosity such that the bulk density thereof is less than 280 kg/m$^3$, and such that the density of the cake obtained by drying at 40°C of a dispersion of 16% by weight of these particles in water is less than 600 kg/m$^3$.

2. The thermal insulation product according to claim 1, **characterised in that** the particles have a size of at least 500 nm, preferably at least 750 nm, particularly preferably at least 900 nm, in particular at least 1 $\mu$m, especially several micrometres.

3. The thermal insulation product according to one of claims 1 to 2, **characterised in that** the pore volume of the submicron pores of the particles is at least 0.8 $cm^3/g$.

4. The thermal insulation product according to one of claims 1 to 3, **characterised in that** the particles have a specific surface area S greater than 5 $m^2/g$, in particular greater than 20 $m^2/g$.

5. The thermal insulation product according to one of claims 1 to 4, **characterised in that** its density is less than 300 $kg/m^3$, in particular less than 200 $kg/m^3$, especially less than 150 $kg/m^3$, or even less than 100 $kg/m^3$.

6. The thermal insulation product according to one of claims 1 to 5, **characterised in that** it incorporates two ranges of different porosities, of which, advantageously, a first range consists of macropores of diameters between 10 microns and 3 mm, and a second range consists of submicron pores of diameters between 10 nm and 1 $\mu$m, the total pore volume of the thermal insulation material being advantageously greater than 1.8 $cm^3/g$.

7. The thermal insulation product according to one of claims 1 to 6, **characterised in that** it is mostly inorganic.

8. The thermal insulation product according to one of claims 1 to 7, **characterised in that** said particles are carbonate particles, in particular of calcium/magnesium, especially mixed and/or diatomaceous particles.

9. The thermal insulation product according to one of claims 1 to 8, **characterised in that** the structure of the particles, observed by scanning electron microscopy, is in the form of platelets or rosettes or spheres or discs or cylinders, formed, where appropriate, of aggregates and/or agglomerates.

10. The thermal insulation product according to one of claims 1 to 9, **characterised in that** it is obtained from a mixture of at least the following components: water or an aqueous foam, particles, other than aerogel particles, with a submicron porosity such that the bulk density thereof is less than 280 $kg/m^3$, and such that the density of the cake obtained by drying at 40°C of a dispersion of 16% by weight of these particles in water is less than 600 $kg/m^3$, said particles preferably having a specific surface area S greater than 5 $m^2/g$, in particular greater than 20 $m^2/g$, and, where appropriate, an organic binder and/or a mineral binder, and/or a surfactant and/or reinforcements.

11. The thermal insulation product according to one of claims 1 to 10, **characterised in that** it is obtained from a mixture also comprising an organic binder, in particular a latex binder.

12. A method for producing a thermal insulation product, comprising the following steps:

- at least one step of producing a foam from a mixture of mineral particles, other than aerogel particles, with a submicron porosity such that the bulk density thereof is less than 280 $kg/m^3$, and such that the density of the cake obtained by drying at 40°C of a dispersion of 16% by weight of these particles in water is less than 600 $kg/m^3$;
- at least one step of shaping, especially by moulding or casting or spraying this foam;
- at least one step of at least partially drying the foam or material thus obtained.

13. The method according to claim 12, **characterised in that** the particles have a specific surface area S of more than 5 $m^2/g$.

14. The method according to one of claims 12 or 13, **characterised in that** it includes at least one step of preparing said mixture of mineral particles.

15. The method according to one of claims 12 to 14, **characterised in that** the mixture of particles is such that the dry extract, and preferably the proportion of particles, is at least 15%, in particular at least 16% by weight of the mixture.

16. The method according to one of claims 12 to 15, **characterised in that** at least one additive such as a surfactant, an organic or inorganic binder, a rheological agent, a surface agent and/or reinforcements is added into the mixture of particles or into the foam.

17. The method according to one of claims 12 to 16, **characterised in that** an organic binder of latex type is added into the mixture of particles or into the foam.

18. A use of the product according to one of claims 1 to 11 for the thermal insulation of buildings.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010126792 A1
- WO 2011095745 A1
- WO 03097227 A1
- WO 9625475 A